# EUROPEAN PATENT SPECIFICATION

(11) **EP 2 932 083 B1**
(45) Date of publication and mention of the grant of the patent: **21.06.2017**
(21) Application number: 13796119.9
(22) Date of filing: 06.11.2013
(51) Int. Cl.: F02M 37/00, F02B 77/08

(54) **SHUT-DOWN SYSTEM FOR ENGINE AND METHOD FOR MONITORING SHUT-DOWN SYSTEM**
ABSCHALTSYSTEM FÜR EINEN MOTOR UND VERFAHREN ZUR ÜBERWACHUNG DES ABSCHALTSYSTEMS
SYSTÈME DE COUPURE POUR MOTEUR ET PROCÉDÉ DE SURVEILLANCE DU SYSTÈME DE COUPURE

(30) Priority: 11.12.2012 FI 20126287
(43) Date of publication of application: 21.10.2015
(73) Proprietor: Wärtsilä Finland Oy, 65380 Vaasa (FI)
(72) Inventor: PORTIN, Kaj, FI-65300 Vaasa (FI)
(74) Representative: Berggren Oy, Helsinki & Oulu
(86) International application number: PCT/FI2013/051044
(87) International publication number: WO 2014/091067

(56) References cited:
- DE-A1- 3 115 410
- GB-A- 2 320 760
- JP-A- 2002 054 800
- US-A- 4 732 123
- US-A- 4 960 088

## Description

### Technical field of the invention

The present invention relates to a shut-down system for a piston engine in accordance with the preamble of claim 1. The invention also concerns a method for monitoring a pneumatic shut-down system of a piston engine for detecting leakages, as defined in the preamble of the other independent claim.

### Background of the invention

Large internal combustion engines , for example in US 4 732123 A, such as ship or power plant engines, which are provided with a high-pressure fuel injection pump for each cylinder of the engine, are usually provided with a pneumatic shut-down system. A pneumatic stopping cylinder is arranged in connection with each fuel injection pump and the stopping cylinders are connected to a control air tank. In case of an emergency shut-down of the engine, a stopping valve allows pressurized air to flow from the control air tank to the pneumatic stopping cylinders, and the pistons of the cylinders push the quantity adjustment racks of the fuel injection pumps to a position, in which fuel injection into the cylinders of the engine is terminated. A problem with pneumatic shut-down systems is that the systems are not used during the normal operation of the engine. Especially power plant engines may be operated for very long periods without being stopped. A malfunction of the pneumatic shut-down system is thus difficult to detect. The air pipe connecting the pneumatic stopping cylinders to the control air tank is normally not pressurized. Without separate testing, it is thus not possible to detect if the air pipe is leaking. It is possible that the air pipe is disconnected from one or several of the pneumatic cylinders because of the vibrations of the engine. It is even possible that the air pipe has not been connected because of a mistake of the mechanic installing the pneumatic system. However, the functioning of the shut-down system is extremely important in emergency situations.

### Summary of the invention

An object of the invention is to provide an improved shut-down system for a piston engine. The characterizing features of the system according to the invention are given in the characterizing part of claim 1. Another object of the invention is to provide a method for monitoring a pneumatic shut-down system of a piston engine for detecting leakages. The characterizing features of the method are given in the characterizing part of the other independent claim.

The shut-down system according to the invention comprises a pressure medium source, a pneumatic stopping cylinder for each fuel injection pump of the engine, a pressure medium pipe for connecting the stopping cylinders to the pressure medium source, and a stopping valve that is arranged between the pressure medium source and the stopping cylinders for allowing pressure medium flow from the pressure medium source to the stopping cylinders when actuated. The pressure medium pipe is surrounded by an outer pipe and the system is provided with means for introducing pressure medium into the space between the pressure medium pipe and the outer pipe and with means for detecting leakage from the space between the pressure medium pipe and the outer pipe.

In the method according to the invention, pressure medium is introduced into an outer pipe that is arranged around a pressure medium pipe between a pressure medium source and pneumatic stopping cylinders of the engine, and outflow from the space between the pressure medium pipe and the outer pipe is monitored.

In a shut-down system according to the invention and with the method according to the invention, leakages of the system can be easily detected. This improves the safety of the engines utilizing pneumatic shut-down systems.

According to an embodiment of the invention, the means for detecting leakage from the space between the pressure medium pipe and the outer pipe comprise a pressure sensor, which is arranged to measure pressure in the space between the pressure medium pipe and the outer pipe. A pressure sensor is a simple device for detecting leakages. According to another embodiment of the invention, the means for detecting leakage from the space between the pressure medium pipe and the outer pipe comprise a flow meter that is arranged to measure pressure medium flow into the space between the pressure medium pipe and the outer pipe.

According to an embodiment of the invention, the measurement is done automatically before starting of the engine. An automatic measurement before the start can be used for preventing starting of the engine in the case the shut-down system is not working properly. During operation of the engine, the measurement can be done at predetermined intervals, or the monitoring can be continuous.

### Brief description of the drawings

Embodiments of the invention are described below in more detail with reference to the accompanying drawings, in which
Fig. 1 shows schematically a simplified illustration of a shut-down system of a piston engine, and
Fig. 2 shows an arrangement for detecting leakages in a shut-down system.

### Description of embodiments of the invention

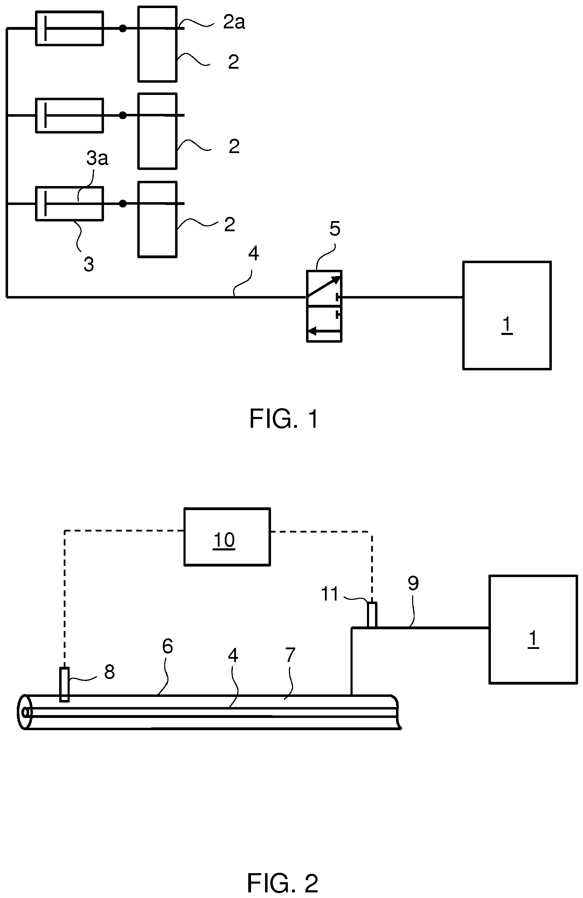

In figure 1 is shown a simplified illustration of a shut-down system of a piston engine. The engine is a large internal combustion engine, such as a main or an auxiliary engine of a ship or an engine that is used at a power plant for producing electricity. The engine comprises a plurality of cylinders, and each cylinder of the engine is provided with a high-pressure fuel injection pump 2 for injecting liquid fuel, such as heavy fuel oil or light fuel oil into the cylinder. Each fuel injection pump 2 is provided with a quantity adjustment rack 2a. By moving the quantity adjustment rack 2a, a plunger pressurizing the fuel and/or a separate quantity adjustment plunger is rotated inside the fuel injection pump 2, and the amount of fuel that is injected into the cylinder of the engine is changed.

For emergency shut-down of the engine, each fuel injection pump 2 is provided with a pneumatic stopping cylinder 3. The pneumatic stopping cylinder 3 comprises a piston 3a, which is connected to the quantity adjustment rack 2a of the fuel injection pump 2. When pressure medium, such as pressurized air, is introduced into the stopping cylinder 3, the piston 3a of the stopping cylinder 3 pushes the quantity adjustment rack 2a of the fuel injection pump 2 into a position, in which the fuel injection is terminated and no fuel is supplied into the cylinder of the engine. The shut-down system of the engine comprises a pressure medium source 1, from which the pressure medium is conducted into the stopping cylinders 3 when the engine needs to be shut down. The pressure medium source 1 can be, for instance, a control air container. The pressurized air of the air container can be used also for other purposes than for shutting down the engine. The pressure in the pressure medium source 1 is typically between 10 to 30 bar. The stopping cylinders 3 are connected to the pressure medium source 1 by means of a pressure medium pipe 4, which is branched for connecting all the stopping cylinders 3 to it. The shut-down system is further provided with a stopping valve 5. The stopping valve 5 is arranged between the pressure medium source 1 and the stopping cylinders 3. The stopping valve 5 is a 3/2 valve. When the engine is running, the stopping valve 5 is in the position shown in figure 1. Pressure medium flow from the pressure medium source 1 to the stopping cylinders 3 is prevented, but outflow from the stopping cylinders 3 is allowed. The pressure medium pipe 4 downstream from the stopping valve 5 is thus not pressurized. When the stopping valve 5 is switched to a shut-down position, flow from the pressure medium source 1 to the stopping cylinders 3 is allowed. The stopping valve 5 can be actuated both electrically and manually. The shut-down system could also be provided with more than one stopping valve 5 for allowing shut-down of the engine from different locations.

Since the pressure medium pipe 4 downstream from the stopping valve 5 is normally not pressurized, in conventional shut-down systems leaking of the pressure medium pipe 4 is very difficult to detect. The shut-down system is used seldom, and it is possible that the pressure medium pipe 4 is disconnected from the stopping cylinders 3 for example due to the vibrations of the engine. If all the stopping cylinders 3 are connected to the same pressure medium pipe 4 and the connection between the pipe 4 and one of the stopping cylinders 3 is leaking, it is possible that all the stopping cylinders 3 malfunction. It is also possible that the mechanic assembling the shut-down system forgets to connect some of the stopping cylinders 3 to the pressure medium pipe 4, and also in this case proper functioning of the shut-down system is prevented.

In a shut-down system according to the invention, leaking of the pressure medium pipe 4 can be easily detected. According to the invention, an outer pipe 6 is arranged around the pressure medium pipe 4, as shown in figure 2. The shut-down system is also provided with means 9 for introducing pressure medium into the space 7 that is formed between the pressure medium pipe 4 and the outer pipe 4. In the embodiment of figure 2, a connecting duct 9 is used for connecting the space 7 between the pressure medium pipe 4 and the outer pipe 6 to the same pressure medium source 1, which supplies pressure medium to the stopping cylinders 3. However, also a different pressure medium source could be used or the outer pipe 6 could be connected directly to the pressure medium source 1. The shut-down system is further provided with means 8, 11 for detecting leakage from the space 7 between the pressure pipe 4 and the outer pipe 6. In the embodiment of figure 2, the means 8, 11 for detecting leakage comprise a pressure sensor 8. The pressure sensor 8 is used for measuring pressure in the space 7 between the pressure medium pipe 4 and the outer pipe 6. If the pressure medium pipe 4 leaks to the space 7 between the pressure medium pipe 4 and the outer pipe 6, the pressure medium can penetrate from the space 7 into the pressure medium pipe 4. Since the stopping valve 5 normally allows outflow from the pressure medium pipe 4, the pressure in the space 7 between the pressure medium pipe 4 and the outer pipe 6 drops, and the pressure drop can be detected by the pressure sensor 8. A pressure drop also occurs if the outer pipe 6 is leaking, and this can also be detected by the pressure sensor 8. Instead of the pressure sensor 8, or in addition to it, a flow meter 11 can be used as a means for detecting leakages from the space 7 between the pressure medium pipe 4 and the outer pipe 6. The flow meter 11 can be arranged to measure the flow of the pressure medium through the connecting duct 9 into the space 7 between the pressure medium pipe 4 and the outer pipe 6. If the system is not leaking, there should be no flow in the connecting duct 9 after the space 7 between the pressure medium pipe 4 and the outer pipe 6 has been filled. If the system leaks either through the pressure medium pipe 4 or through the outer pipe 6, more pressure medium flows into the space 7 between the pressure medium pipe 4 and the outer pipe 6, and this can be detected by the flow meter 11.

The pressure sensor 8 and the flow meter 11 can be connected to a control unit 10. The control unit 10 can be used for controlling the pressure sensor 8 and/or the flow meter 11 and also for collecting measurement data. The monitoring by the pressure sensor 8 and/or the flow meter 11 can be continuous. Alternatively, measurements can be done at certain predetermined intervals. Measurements can also be performed automatically before starting of the engine, and the starting can be prevented in case a leakage is detected. The space 7 between the pressure medium pipe 4 and the outer pipe 6 can be continuously pressurized, or pressure medium can be introduced into the space 7 before each measurement.

It will be appreciated by a person skilled in the art that the invention is not limited to the embodiments described above, but may vary within the scope of the appended claims.

## Claims

1. A shut-down system for a piston engine, which shut-down system comprises a pressure medium source (1), a pneumatic stopping cylinder (3) for each fuel injection pump (2) of the engine, a pressure medium pipe (4) for connecting the stopping cylinders (3) to the pressure medium source (1), and a stopping valve (5) that is arranged between the pressure medium source (1) and the stopping cylinders (3) for allowing pressure medium flow from the pressure medium source (1) to the stopping cylinders (3) when actuated, **characterized in that** the pressure medium pipe (4) is surrounded by an outer pipe (6) and the system is provided with means (9) for introducing pressure medium into the space (7) between the pressure medium pipe (4) and the outer pipe (6) and with means (8, 11) for detecting leakage from the space (7) between the pressure medium pipe (4) and the outer pipe (6).

2. A system according to claim 1, **characterized in that** the means (8, 11) for detecting leakage from the space (7) between the pressure medium pipe (4) and the outer pipe (6) comprise a pressure sensor (8), which is arranged to measure pressure in the space (7) between the pressure medium pipe (4) and the outer pipe (6).

3. A system according to claim 1, **characterized in that** the means (8, 11) for detecting leakage from the space (7) between the pressure medium pipe (4) and the outer pipe (6) comprise a flow meter (11) that is arranged to measure pressure medium flow into the space (7) between the pressure medium pipe (4) and the outer pipe (6).

4. A method for monitoring a pneumatic shut-down system of a piston engine for detecting leakages, **characterized in that** pressure medium is introduced into an outer pipe (6) that is arranged around a pressure medium pipe (4) between a pressure medium source (1) and pneumatic stopping cylinders (3) of the engine, and outflow from the space (7) between the pressure medium pipe (4) and the outer pipe (6) is monitored.

5. A method according to claim 4, **characterized in that** the outflow is monitored by measuring pressure in the space (7) between the pressure medium pipe (4) and the outer pipe (6).

6. A method according to claim 4, **characterized in that** the outflow is monitored by measuring pressure medium flow into the space (7) between the pressure medium pipe (4) and the outer pipe (6).

7. A method according to claim 5 or 6, **characterized in that** the measurement is done automatically before starting of the engine.

8. A method according to any of claims 5-7, **characterized in that** the measurement is done at predetermined intervals.

9. A method according to any of claims 5-7, **characterized in that** continuous measurement is used.

## Patentansprüche

1. Abschaltsystem für einen Kolbenmotor, wobei das Abschaltsystem enthält: eine Druckmittelquelle (1), einen pneumatischen Stopperzylinder (3) für jede Treibstoffeinspritzpumpe (2) der Maschine, ein Druckmittelrohr (4) zum Verbinden der Stopperzylinder (3) mit der Druckmittelquelle (1) und ein Stoppventil (5), das zwischen der Druckmittelquelle (1) und den Stopperzylindern (3) angeordnet ist, um bei Betätigung einen Druckmittelstrom von der Druckmittelquelle (1) zu den Stopperzylindern (3) zu erlauben, **dadurch gekennzeichnet, dass** das Druckmittelrohr (4) von einem äußeren Rohr (6) umgeben ist, und das System mit Mitteln (9) zum Einführen eines Druckmittels in den Raum (7) zwischen dem Druckmittelrohr (4) und dem äußeren Rohr (6) und mit Mitteln (8, 11) zum Erfassen eines Leckstroms von dem Raum (7) zwischen dem Druckmittelrohr (4) und dem äußeren Rohr (6) versehen ist.

2. System nach Anspruch 1, **dadurch gekennzeichnet, dass** die Mittel (8, 11) zum Erfassen eines Leckstroms von dem Raum (7) zwischen dem Druckmittelrohr (4) und dem äußeren Rohr (6) einen Drucksensor (8) aufweisen, der dazu eingerichtet ist, einen Druck in dem Raum (7) zwischen dem Druckmittelrohr (4) und dem äußeren Rohr (6) zu messen.

3. System nach Anspruch 1, **dadurch gekennzeichnet, dass** die Mittel (8, 11) zum Erfassen eines Leckstroms von dem Raum (7) zwischen dem Druckmittelrohr (4) und dem äußeren Rohr (6) eine Strömungsmesseinrichtung (11) aufweisen, die dazu eingerichtet ist, einen Druckmittelstrom in den Raum (7) zwischen dem Druckmittelrohr (4) und dem äußeren Rohr (6) zu messen.

4. Verfahren zur Überwachung eines pneumatischen Abschaltsystems eines Kolbenmotors zum Erfassen von Leckströmen, **dadurch gekennzeichnet, dass** ein Druckmittel in ein äußeres Rohr (6) eingeführt wird, das um ein Druckmittelrohr (4) zwischen einer Druckmittelquelle (1) und pneumatischen Stopperzylindern (3) der Maschine angeordnet ist, und dass ein Ausstrom von dem Raum (7) zwischen dem Druckmittelrohr (4) und dem äußeren Rohr (6) überwacht wird.

5. Verfahren nach Anspruch 4, **dadurch gekennzeichnet, dass** der Ausstrom durch Messen eines Drucks in dem Raum (7) zwischen dem Druckmittelrohr (4) und dem äußeren Rohr (6) überwacht wird.

6. Verfahren nach Anspruch 4, **dadurch gekennzeichnet, dass** der Ausstrom durch Messen eines Druckmittelstroms in den Raum (7) zwischen dem Druckmittelrohr (4) und dem äußeren Rohr (6) überwacht wird.

7. Verfahren nach Anspruch 5 oder 6, **dadurch gekennzeichnet, dass** das Messen automatisch vor einem Starten der Maschine durchgeführt wird.

8. Verfahren nach einem beliebigen der Ansprüche 5-7, **dadurch gekennzeichnet, dass** das Messen in vorbestimmten Intervallen durchgeführt wird.

9. Verfahren nach einem beliebigen der Ansprüche 5-7, **dadurch gekennzeichnet, dass** eine fortlaufende Messung eingesetzt wird.

## Revendications

1. Système de coupure pour un moteur à pistons, lequel système de coupure comprend une source de fluide sous pression (1), un vérin d'arrêt pneumatique (3) pour chaque pompe d'injection de carburant (2) du moteur, un tuyau de fluide sous pression (4) pour relier les vérins d'arrêt (3) à la source de fluide sous pression (1), et une soupape d'arrêt (5) qui est agencée entre la source de fluide sous pression (1) et les vérins d'arrêt (3) pour permettre au fluide sous pression de circuler de la source de fluide sous pression (1) vers les vérins d'arrêt (3) lorsqu'ils sont actionnés, **caractérisé en ce que** le tuyau de fluide sous pression (4) est entouré d'un tuyau extérieur (6) et le système est doté de moyens (9) pour introduire du fluide sous pression dans l'espace (7) entre le tuyau de fluide sous pression (4) et le tuyau extérieur (6) et de moyens (8, 11) pour détecter une fuite de l'espace (7) entre le tuyau de fluide sous pression (4) et le tuyau extérieur (6).

2. Système selon la revendication 1, **caractérisé en ce que** les moyens (8, 11) pour détecter une fuite de l'espace (7) entre le tuyau de fluide sous pression (4) et le tuyau extérieur (6) comprennent un capteur de pression (8) qui est agencé pour mesurer la pression dans l'espace (7) entre le tuyau de fluide sous pression (4) et le tuyau extérieur (6).

3. Système selon la revendication 1, **caractérisé en ce que** les moyens (8, 11) pour détecter une fuite de l'espace (7) entre le tuyau de fluide sous pression (4) et le tuyau extérieur (6) comprennent un débitmètre (11) qui est agencé pour mesurer l'écoulement du fluide sous pression dans l'espace (7) entre le tuyau de fluide sous pression (4) et le tuyau extérieur (6).

4. Procédé de surveillance d'un système de coupure pneumatique d'un moteur à pistons pour détecter des fuites, **caractérisé en ce que** du fluide sous pression est introduit dans un tuyau extérieur (6) qui est agencé autour d'un tuyau de fluide sous pression (4) entre une source de fluide hydraulique (1) et des vérins d'arrêt pneumatiques (3) du moteur, et l'écoulement sortant de l'espace (7) entre le tuyau de fluide sous pression (4) et le tuyau extérieur (6) est surveillé.

5. Procédé selon la revendication 4, **caractérisé en ce que** l'écoulement sortant est surveillé en mesurant la pression dans l'espace (7) entre le tuyau de fluide sous pression (4) et le tuyau extérieur (6).

6. Procédé selon la revendication 4, **caractérisé en ce que** l'écoulement sortant est surveillé en mesurant l'écoulement du fluide sous pression dans l'espace (7) entre le tuyau de fluide sous pression (4) et le tuyau extérieur (6).

7. Procédé selon la revendication 5 ou 6, **caractérisé en ce que** la mesure est effectuée automatiquement avant le démarrage du moteur.

8. Procédé selon l'une quelconque des revendications 5 à 7, **caractérisé en ce que** la mesure est effectuée à intervalles prédéterminés.

9. Procédé selon l'une quelconque des revendications 5 à 7, **caractérisé en ce que** la mesure continue est employée.
